# EUROPÄISCHE PATENTSCHRIFT

(11) **EP 1 678 261 B1**
(45) Veröffentlichungstag und Bekanntmachung des Hinweises auf die Patenterteilung: **05.12.2012**
(21) Anmeldenummer: 03770974.8
(22) Anmeldetag: 11.10.2003
(51) Int. Cl.: C09C 1/40, C09C 1/00, C09C 3/12, E04F 15/00, D21H 27/28

(54) **DEKORPAPIER MIT AUFGESTREUTEM, MIT EINEM HAFTVERMITTLER BESCHICHTETEN KORUND**
DECORATIVE PAPER WITH SPRINKLED CORUNDUM, COATED WITH AN ADHESIVE
PAPIER DECORATIF A CORINDON SAUPOUDRE ET ENDUIT D'UN ADHESIF

(30) Priorität: 30.09.2003 DE 20315135 U
(43) Veröffentlichungstag der Anmeldung: 12.07.2006
(73) Patentinhaber: Kronoplus Technical AG, 9052 Niederteufen (CH)
(72) Erfinder: DÖHRING, Dieter, 01561 Zabeltitz (DE)
(74) Vertreter: Heselberger, Johannes
(86) Internationale Anmeldenummer: PCT/EP2003/011285
(87) Internationale Veröffentlichungsnummer: WO 2005/042644

(56) Entgegenhaltungen:
- EP-A- 0 255 079
- EP-A- 0 722 992
- EP-A- 0 953 591
- EP-A- 1 262 455
- US-A1- 2003 138 600
- US-B1- 6 290 815

## Beschreibung

Die Erfindung bezieht sich auf ein Papier für den Einsatz in einem Laminatpaneel und auf ein Verfahren zur Herstellung eines solchen Papiers. Die Erfindung betrifft ferner ein damit hergestelltes Laminatpaneel. Die US 4,940, 503 offenbart ein Verfahren, bei dem abriebfeste Partikel wahlweise auf ein mit Melaminharz imprägniertes Overlay oder auf ein mit Melaminharz imprägniertes Dekorpapier aufgestreut werden. Overlay und Dekorpapier werden anschließend so miteinander verpresst, dass ein Dekorpapier mit abriebfester Oberfläche resultiert. Die Abriebfestigkeit, die mit einem solchen Verfahren erreicht werden kann, ist allerdings im Vergleich zu anderen Verfahren relativ gering.

Aus dem Patent US 6,290,815 B1 ist ein Papier bekannt, dass mit abriebfesten Materialien versehen ist. Die abriebfesten Materialien sollen vorzugsweise mit einem Polymer vorbeschichtet sein, um die scharfen Kanten der abriebfesten Partikel zu überdecken, um in einem späteren Pressprozess die Presswerkzeuge vor Abnutzung zu schonen. Die verwendete Vorbeschichtung soll dabei so weich sein, dass sie bei späterer Benutzung des Papiers abgetragen werden kann, so dass die eigentlichen abriebfesten Partikel ihre Funktion erfüllen können.

Die US 4,940,503 und US 6,835,421 B1 betreffen die Herstellung eines Laminatpaneels umfassend Papiere die mit einem Harz imprägniert und mit abriebfesten Partikeln versehen sind. Als abriebfeste Partikel werden beispielsweise Aluminiumoxidpartikel verwendet. Die WO 00/44576 betrifft ein Verfahren zur Herstellung von Laminatbeschichtungen für Fußbodenplatten. Dabei soll ein imprägniertes Dekorpapier mit partikelförmigen feinen Korund versehen werden, um die Abriebfestigkeit der Beschichtung zu erhöhen. Die WO 02/079571 A1 betrifft ein Verfahren zur Herstellung eines Papiers, wobei das Papier mit einer acrylathaltigen Dispersion oder Mischung imprägniert ist. Das Papier kann zusätzlich mit abriebfesten Partikeln versehen sein.

Die EP 0 255 079 A2 beschreibt die Verwendung von mit Aminosilan beschichtetem Wollastonit als korrosionsschützenden Füllstoff in Lacken oder Grundierungen. Das beschichtete Wollastonit soll dabei eine hohe Sperrfähigkeit gegen korrosionserzeugende Agenzien haben, und die passive Korrosionsschutzwirkung des Wollastonits soll durch das Beschichten mit Aminosilan verbessert werden. Die so behandelten Lacke oder Grundierungen dienen beispielsweise als eine Rostschutzgrundierung.

Die WO 00/44576 A1 offenbart ein weiteres Verfahren, bei dem abriebfeste Partikel wie Korund auf das imprägnierte Dekorpapier aufgestreut werden. Anschließend werden Fasern zusammen mit Harz aufgebracht und das Schichtsystem verpresst. Auch bei diesem Verfahren ist die Abriebfestigkeit vergleichsweise gering.

Die WO 00/44984 A1 offenbart ein Verfahren, bei dem eine spezielle Dispersion, die abriebfeste Partikel wie Korund oder Siliziumkarbid enthält, auf ein Dekorpapier gesprüht wird. Das Dekorpapier wird wiederum bei der Fertigung eines Laminat-Fußbodenpaneels eingesetzt. Mit Hilfe dieses Verfahrens gelingt es zwar, hohe Abriebwerte zu erzielen. Nachteilhaft ist jedoch ein hoher apparativer Aufwand zu betreiben, da überschüssige Dispersion gehandhabt werden muss, Apparate für das gezielte Versprühen notwendig sind, eine ständige Durchmischung der Dispersion sichergestellt werden und schließlich ein hoher Trocknungsaufwand betrieben werden muss.

Es ist Aufgabe der Erfindung, ein einfach herzustellendes Dekorpapier mit hoher Abriebfestigkeit zu schaffen.

Erfindungsgemäß werden abriebfeste Partikel mit einem Silanhaftvermittler umhüllt und die abriebfesten Partikel werden auf imprägniertes Dekorpapier oder auf ein imprägniertes Overlay gestreut.

Anschließend werden Dekorpapier und Overlay miteinander verpresst. Sind die abriebfesten Partikel auf das Dekorpapier aufgestreut worden, so können anstelle eines Overlays beispielsweise Fasern aufgestreut sowie ein Harz aufgebracht werden, um so eine Presse beim Verpressen vor Beschädigungen durch die abriebfesten Partikel zu schützen.

Durch Verwendung des Streuverfahrens gelingt im Vergleich zum Sprühverfahren, wie es aus der WO 00/44984 AI bekannt ist, eine gleichmäßigere Verteilung des abriebfesten Materials. Auch ist der apparative Aufwand geringer. Das Umhüllen der Partikel mit einem Haftvermittler gelingt sehr einfach, da die Partikel lediglich in ein entsprechendes Bad vorrübergehend eingetaucht werden müssen.

Dies ist technisch deutlich weniger aufwändig im Vergleich zum apparativen Aufwand, der gemäß der WO 00/44984 A1 erforderlich ist.

Um die abriebfesten Partikel besonders sicher dosieren zu können, werden die mit dem Haftvermittler versehenen Partikel bevorzugt vor dem Aufstreuen getrocknet, Im getrockneten und damit besonders gut dosierfähigen Zustand ummantelt der Haftvermittler die abriebfesten Partikel insbesondere vollständig, um so zu besonders guten Abriebwerten zu gelangen. Die abriebfesten Partikel werden für diesen Zweck zunächst in eine Flüssigkeit getaucht, die im Wesentlichen aus dem Haftvermittler besteht. Alternativ werden die abriebfesten Partikel mit dem Haftvermittler besprüht. Dies ist immer noch weniger aufwändig im Vergleich zu dem Aufwand, der gemäß der WO 00/44984 A1 zu betreiben ist, da nicht auf Dosierung und Umwälzung geachtet werden muss. Anschließend werden die Partikel getrocknet und sind nun besonders gut einsatzfähig. Die getrockneten, mit einem Haftvermittler versehenen abriebfesten Partikel werden auf das Dekorpapier oder auf das Overlay aufgestreut. Bevorzugt wird für das Aufstreuen eine Walze eingesetzt, die mit Vertiefungen versehen ist, die insbesondere ungleichmäßig verlaufen. Die Tiefe der Vertiefungen wird jedoch dabei im Wesentlichen beibehalten. Die mit dem Haftvermittler versehenen abriebfesten Partikel werden von oben auf die Walze aufgestreut und gelangen so in die Vertiefungen hinein. Mittels eines Rakels wird überschüssiges Material, also überschüssige mit einem Haftvermittler versehenen abriebfesten Partikel abgestreift. Anschließend gelangt die sich drehende Walze zu einer Bürste, die die mit einem Haftvermittler versehenen abriebfesten Partikel herauskehrt.

Es handelt sich bei der Bürste bevorzugt um eine umlaufende Walze, die mit Borsten versehen ist, um so gleichmäßig die mit einem Haftvermittler versehenen Partikel herauszukehren. Auf diese Weise werden die abriebfesten Partikel gleichmäßig auf das Dekorpapier oder auf das Overlaypapier aufgestreut und zwar mit einer Menge von 18 bis 25 g/m² in Abhängigkeit von der gewünschten Abriebklasse. Die Korngröße beträgt bevorzugt 90 bis 130 µm im Durchmesser. Wird der Durchmesser kleiner gewählt, so wird eine relativ große Menge an abriebfesten Partikeln nebst Haftvermittler verbraucht. Wird der Durchmesser grösser gewählt, so können die abriebfesten Partikel das üblicherweise eingesetzte Overlay durchdringen und die Presse beschädigen.

Bevor das Papier, also das Dekorpapier oder das Overlay mit den abriebfesten Partikeln bestreut wird, werden die jeweiligen Bahnen durch ein Melaminharz oder eine Mischung hindurchgeführt, die Melaminharz enthält. Durch den Haftvermittler gelingt es, die Korundpartikel bzw. das Siliziumkarbid in die Harzmartrix einzubinden. Andernfalls verbleibt eine optisch sichtbare Grenzfläche zwischen den abriebfesten Partikeln und dem Harz bzw. der Harzmatrix, was zu einer Vergrauung führt. Wird kein Haftvermittler eingesetzt, so können die abriebfesten Partikel aus der Matrix herausgerissen werden, was zu geringen Abriebwerten führt.

Besonders bevorzugt wird das abriebfeste Material auf das Dekorpapier aufgestreut, da die Praxis gezeigt hat, dass die abriebfesten Partikel die Presse eher schädigen können, wenn die abriebfesten Partikel unmittelbar auf das Overlay aufgestreut werden.

Schließlich werden Overlay und Dekorpapier so zusammengeführt und verpresst, dass die abriebfesten Partikel eine Zwischenlage bilden. Die Oberflächentemperatur beträgt während des Verpressens bevorzugt 180 bis 185 °C. Es werden typischerweise Drücke von 20 bis 35 bar eingesetzt. Die angegebene Temperatur ist von Vorteil, damit das Harzmaterial aushärtet. Der genannte Druck ist von Vorteil, um das Wasser, welches das Schichtsystem enthält, in flüssiger Form zu halten. Andernfalls würde es in gasförmiger Form entweichen und dabei eine raue Oberfläche erzeugen. Durch den hohen Druck wird ferner eine sehr homogene Oberfläche sichergestellt.

Erfindungsgemäß weist das Dekorpapier eine Masse von 20 bis 60 g/m² auf, um so mit geringen Harzmengen auskommen zu können. Das Dekorpapier ist bevorzugt mit Acrylat oder einer Acrylat haltigen Dispersion gefüllt, um so die benötigte Menge an relativ teurem Melaminharz weiter reduzieren zu können. Das Acrylat bzw. die Dispersion wird in das Dekorpapier insbesondere von bei- den Seiten hineingepresst, um so sicherzustellen, dass dieses in das Innere des Papiers gelangt. Die WO 02/079 571 A1 offenbart geeignete Zusammensetzungen sowie ein Verfahren, um das Acrylat bzw. die Dispersion im Sinne der vorliegenden Erfindung ins Innere des Papiers zu bringen.

Während des Aufstreuens werden bevorzugt seitlich der Papiere (Overlay oder Dekorpapier) Trichter bereitgestellt, über die überschüssige abriebfeste Partikel aufgefangen und abgeführt werden. Auf diese Weise gelingt die Wiederverwertung der abriebfesten Partikel, soweit diese seitlich im Überschuss gestreut worden sind.

Im Vergleich zur Sprühtechnik, die aus der WO 00/44984 A1 bekannt ist, wird ein großer apparativer Aufwand vermieden. In Kombination mit Korund als abriebfestes Material gelingt durch die Erfindung erstmals die Bereitstellung brillanter Oberflächen bei Verwendung von dunklen Dekorpapieren.

Als abriebfeste Partikel werden bevorzugt Korund- oder Aluminiumoxidpartikel vorgesehen, da sich alternative Materialien wie Siliziumkarbid leichter in eine Harzmatrix einbauen lassen. Siliziumkarbid weist jedoch gegenüber Korund oder Aluminiumoxid den Nachteil auf, dass es sich um dunkle Partikel handelt, die insbesondere bei hellen Dekoren gut sichtbar sind. In der Regel ist Siliziumkarbid daher aus optischen Gründen weniger geeignet.

Beim Imprägnieren wird Dekorpapier typischerweise mit 100 bis 120 Gew.-% Harz bezogen auf das Dekorpapier versehen. Liegt also das Flächengewicht des Dekorpapiers zum Beispiel bei 100 g/m², so wird 100 bis 120 g Harz eingesetzt. Wird dagegen Dekorpapier mit einem Gewicht von lediglich 30 g/m² vorgesehen und ist In das Papier ein Acrylat bzw. eine Acrylat haltige Dispersion hineingepresst worden, so kann die für das Imprägnieren benötigte Harzmenge auf 45 bis 55 Gew.-% reduziert werden.

Anstelle von Melaminharz können auch Mischharze eingesetzt werden. Typischerweise könnte ein solches Mischharz aus 70 bis 80 Gew-% Harnstoffharz und 20 bis 30 Gew-% Melaminharz bestehen, um so die Kosten für das Harz zu senken. Dekorpapier wird bevorzugt mit einem Mischharz imprägniert, weil so Kosten gespart werden können. Ein Overlay wird bevorzugt mit reinem Melaminharz imprägniert, um so die gewünschten Oberflächeneigenschaften bereitzustellen. Insbesondere kommt es bei der Oberfläche nämlich auf Unempfindlichkeit gegenüber Fleckenbildung sowie auf Chemikalienbeständigkeit an. Auch schützt Melaminharz die Oberfläche besonders gut gegen Feuchtigkeit.

Es resultiert ein Dekorpapier, bei dem Korund in einer Ebene liegt. Dies liegt daran, dass Korund auf das Papier aufgestreut worden ist. Dies kann mit dem Mikroskop festgestellt werden. Außerdem kann der Haftvermittler beim fertigen Produkt festgestellt werden, der die abriebfesten Partikel umhüllt.

Es werden als Haftvermittler solche auf einer Silan-Basis verwendet, weil diese Haftvermittler besonders gut geeignet sind, um auf der einen Seite am Korund oder Aluminiumoxid anzuhaften und auf der anderen Seite mit den eingesetzten Harzen in gewünschter Weise wechselwirken, um die gewünschte Haftung und damit die gewünschte Abriebfestigkeit herbeizuführen.

Als besonders geeignet hat sich jedoch ein Amino-Silan-Haftvermittler herausgestellt.

Es zeigen:
- Fig. 1:: Vorrichtung zum Aufstreuen von abriebfesten Partikeln auf ein Papier;
- Fig. 2:: hergestelltes Papier;
- Fig. 3:: Paneel mit hergestelltem Papier.

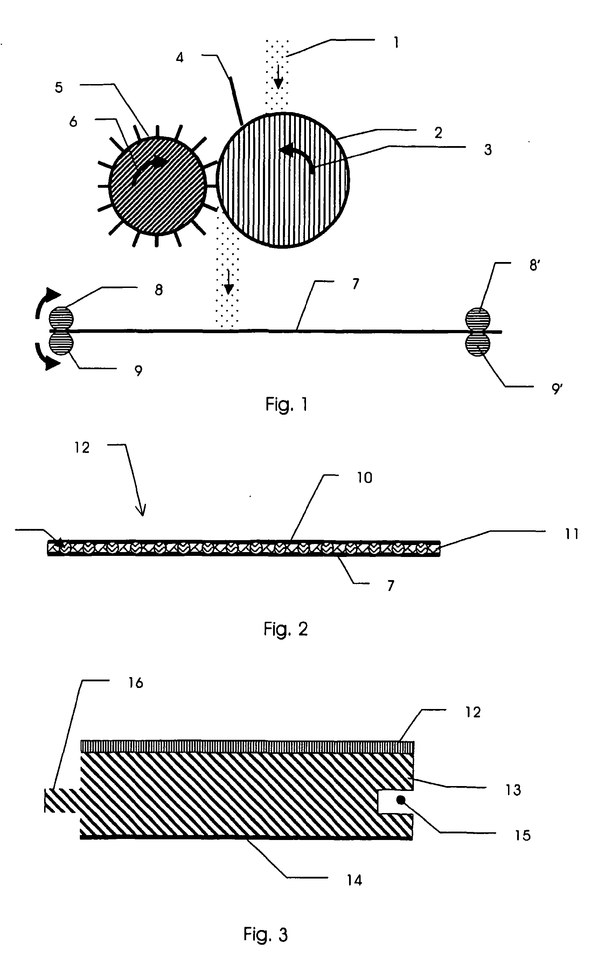

Abriebfeste Partikel 1 aus Korund mit einem Durchmesser von 90 bis 130 µm wurden mit einem Silanhaftvermittler umhüllt und getrocknet. Die abriebfesten Partikel 1 befinden sich nun in einem rieselfähigen Zustand und werden auf eine Walze 2 aufgestreut, wie die Figur 1 im Querschnitt verdeutlicht. Die Walze 2 weist an der Oberfläche nicht dargestellte Vertiefungen auf. Durch das langsame Drehen der Walze 2 gegen den Uhrzeigersinn entlang des Pfeils 3 gelangen die aufgestreuten Partikel zu einem Rakel 4, der an der Walze 2 mit einem offenen Ende anliegt. Durch den Rakel wird sichergestellt, dass die abriebfesten Partikel 1 gleichmäßig und vollständig die Vertiefungen auffüllen. Von hier aus werden die abriebfesten Partikel zu einer schnell drehenden Bürste 5 weiter transportiert, die sich im Beispielsfall mit dem Uhrzeigersinn in Richtung des Pfeils 6 dreht. Die abriebfesten Partikel werden so vollständig aus den Vertiefungen herausgekehrt und gelangen so auf die Oberfläche eines Dekorpapiers 7. Das Dekorpapier wird mit Hilfe von sich geeignet drehenden Walzen 8 und 9 unterhalb der Walze geführt. Das Dekorpapier 7 wurde unmittelbar zuvor mit einer Mischung aus 25 Gew.-% Melaminharz und 74 Gew.-% Harnstoffharz imprägniert. Das Dekorpapier weist ein Flächengewicht von 30 g/m² auf und weist im Inneren Acrylat auf. Der Harzauftrag beträgt bei der Imprägnierung 15 g pro Quadratmeter Papier.

Es gelingt so, dass Papier besonders gleichmäßig mit abriebfesten Partikeln zu bestreuen. Die abriebfesten Partikel 1 grenzen dabei an die Seite mit dem aufgedruckten Dekor an.

Anschließend wird ein Overlay 10, welches mit einem Melaminharz imprägniert worden ist, über die abriebfesten Partikel 1 gelegt und das Schichtsystem unter Zufuhr von Wärme bei Drucken von 30 bar und Temperaturen von 180 °C verpresst. Es resultiert der schematisch in Figur 2 gezeigte Aufbau, bei dem nun die abriebfesten Partikel fest in der Harzmatrix 11 verankert sind. Die abriebfesten Partikel 1 befinden sich in einer Ebene.

Das so mit einer abriebfesten Schicht versehene Dekorpapier 1 2 wird nun mit einer Basisplatte 13 aus HDF und einem Gegenzugpapier 14 verpresst. Anschließend werden Paneele gewünschter Größe von typischerweise 20 bis 40 cm Breite und einer Länge von typischerweise 80 cm bis 160 cm ausgesägt und seitlich mit Kupplungsmitteln wie Nut 15 oder Feder 16 versehen. Bevorzugt weisen Nut und Feder weitere nicht dargestellte Verriegelungsmittel auf, die zwei Paneele formschlüssig miteinander so verbinden können, so dass eine Verriegelung parallel zur Oberfläche der Paneele vorliegt. Solche Versiegelungen sind beispielsweise aus der WO 02/079 571 A1 bekannt.

Das Gegenzugpapier weist insbesondere ein geringes Flächengewicht von 20 bis 60 g/m² auf und ist bevorzugt mit Acrylat versehen und mit einem Harnstoffharz oder einer Mischung, die überwiegend Harnstoffharz enthält, vor dem Verpressen imprägniert worden. Auf diese Weise werden die Kosten für die Aufbringung des Gegenzugpapiers minimiert, da vergleichsweise wenig, relativ zu anderen Harzen preiswertes Harz verwendet wird. Das Gegenzugpapier schützt ein Paneel vor Verzug.

## Patentansprüche

1. Papier (7) für den Einsatz in einem Laminatpaneel, wobei das Papier mit Harz imprägniert ist und abriebfeste Partikel (1) aus Siliziumkarbid oder Aluminiumoxid umfasst, wobei die abriebfesten Partikel (1) mit einem Silanhaftvermittler umhüllt sind und in der Harzmatrix im ausgehärteten Zustand des Harzes eingebunden sind, **dadurch gekennzeichnet, dass** das Papier ein Gewicht von 20 bis 60 g/m² hat und 18 bis 25 g/m² abriebfeste Partikel (1) umfasst, wobei die abriebfesten Partikel (1) einen Durchmesser von 90 bis 200 µm aufweisen.

2. Papier nach einem der Ansprüche 1 oder 2, **dadurch gekennzeichnet, dass** der Silanhaftvermittler ein Aminosilanhaftvermittler ist.

3. Papier nach einem der vorhergehenden Ansprüche, **dadurch gekennzeichnet, dass** das Aluminiumoxid als Korund vorliegt.

4. Papier nach einem der vorhergehenden Ansprüche, **dadurch gekennzeichnet, dass** das Papier mit Acrylat gefüllt ist.

5. Papier nach einem der vorhergehenden Ansprüche, **dadurch gekennzeichnet, dass** die abriebfesten Partikel (1) in einer Ebene liegen.

6. Papier (7) nach einem der vorhergehenden Ansprüche, **dadurch gekennzeichnet, dass** das Harz eine Mischung ist, die ein Aminoharz sowie ein weiteres Harz ein Harnstoffharz enthält und das Papier mit einem Dekor versehen ist, wobei das Papier bevorzugt mit einem Overlay (10) oder Fasern verpresst ist, und wobei das Overlay (10) oder die Fasern mit einem reinen Aminoharz imprägniert sind.

7. Papier nach einem der vorhergehenden Ansprüche, **dadurch gekennzeichnet, dass** die abriebfesten Partikel auf das Papier durch Aufstreuen aufgebracht sind.

8. Verfahren zur Herstellung eines Papiers nach einem der Ansprüche 1 bis 7, wobei das Papier mit Harz imprägniert wird und abriebfeste Partikel (1), die mit einem Silanhaftvermittler umhüllt sind, auf das Papier aufgestreut werden.

9. Laminatpaneel mit einem Papier nach einem der Ansprüche 1 bis 7, **dadurch gekennzeichnet, dass** das Papier (12) auf einer Basisplatte (13), insbesondere bestehend aus einem Holzwerkstoff wie HDF oder MDF aufgebracht ist, und die gegenüber liegende Seite der Basisplatte (12) bevorzugt mit einem Gegenzugpapier (14) versehen ist, welches insbesondere 20 bis 60 g/m² schwer ist.

10. Laminatpaneel nach Anspruch 9, **dadurch gekennzeichnet, dass** das Laminatpaneel seitlich angebrachte Kupplungselemente (15, 16) wie Nut und Feder, sowie insbesondere weitere Kupplungselemente umfasst, so dass zwei Laminatpaneele durch Formschluss sowohl senkrecht zur Paneeloberfläche als auch parallel zur Paneeloberfläche verbunden werden können.

11. Laminatpaneel nach einem der Ansprüche 9 oder 10, **dadurch gekennzeichnet, dass** das Gegenzugpapier (14) mit einem Harnstoffharz versehen ist.

## Claims

1. Paper (7) to be used with a laminate panel, wherein the paper is impregnated with a resin and comprises abrasion resistant particles (1) of silicon carbide or aluminum oxide, wherein the abrasion resistant particles (1) are coated with a silane adhesion promoter and are integrated into the resin matrix in the cured condition of the resin, **characterized in that**, the paper has a weight of 20 to 60 g/m² and comprises 18 to 25 g/m² of abrasion resistant particles (1), wherein the abrasion resistant particles (1) have a diameter of 90 to 200 µm.

2. Paper according to claim 1, **characterized in that** the silane adhesion promoter is an amino silane adhesion promoter.

3. Paper according to any one of the preceding claims, **characterized in that** the aluminum oxide is corundum.

4. Paper according to any one of the preceding claims, **characterized in that** the paper is filled with acrylate.

5. Paper according to any one of the preceding claims, **characterized in that** the abrasion resistant particles (1) lie in a plain.

6. Paper (7) according to any one of the preceding claims, **characterized in that** the resin is a mixture, which contains an amino resin as well as a further resin, namely an urea resin and that the paper is provided with a decor, wherein the paper is preferably being pressed with an overlay (10) or fibers and wherein the overlay (10) or the fibers are impregnated with a pure amino resin.

7. Paper according to any one of the preceding claims, **characterized in that** the abrasion resistant particles are applied onto the paper by means of spreading.

8. Method for the manufacturing of a paper in accordance with any one of claims 1 - 7, wherein the paper is impregnated with resin and wherein abrasion resistant particles (1), which are coated with a silane adhesion promoter, are spread onto the paper.

9. Laminate panel with a paper in accordance with any one of claims 1 - 7, **characterized in that** the paper (12) is applied on a baseboard (13), in particular consisting of a wood material, as for example HDF or MDF, and that the opposing side of the baseboard (12) is preferably provided with a counter acting paper (14), which in particular has a weight of 20 to 60 g/m².

10. Laminate panel according to claim 9, **characterized in that** the laminate panel comprises coupling elements (15, 16) at lateral sides thereof, such as groove and tongue, as well as in particular further coupling elements, so that two laminate panels can be connected with each other both in a perpendicular direction relative to the surface of the panels, as well as parallel to the surface of the panels in a form fitting manner.

11. Laminate panel according to any one of claims 9 or 10, **characterized in that** the counter acting paper (14) is provided with a urea resin.

## Revendications

1. Papier (7) destiné à être utilisé dans un panneau stratifié, le papier étant imprégné de résine et comprenant des particules résistantes à l'abrasion (1) en carbure de silicium ou oxyde d'aluminium, les particules résistantes à l'abrasion (1) étant enveloppées d'un agent adhésif au silane et liées dans la matrice de résine à l'état durci de la résine, **caractérisé en ce que** le papier a un poids de 20 à 60 g/m² et comprend 18 à 25 g/m² de particules résistantes à l'abrasion (1), les particules résistantes à l'abrasion (1) présentant un diamètre de 90 à 200 µm.

2. Papier selon une des revendications 1 ou 2, **caractérisé en ce que** l'agent adhésif au silane est un agent adhésif à l'aminosilane.

3. Papier selon une des revendications précédentes, **caractérisé en ce que** l'oxyde d'aluminium est présent sous forme de corindon.

4. Papier selon une des revendications précédentes, **caractérisé en ce que** le papier est chargé à l'acrylate.

5. Papier selon une des revendications précédentes, **caractérisé en ce que** les particules résistantes à l'abrasion (1) sont situées dans un plan.

6. Papier (7) selon une des revendications précédentes, **caractérisé en ce que** la résine est un mélange qui contient une résine aminique ainsi qu'une autre résine, à savoir une résine d'urée, et le papier est muni d'un décor, le papier étant de préférence pressé avec un overlay (10) ou des fibres, et l'overlay (10) ou les fibres étant imprégnés d'une résine aminique pure.

7. Papier selon une des revendications précédentes, **caractérisé en ce que** les particules résistantes à l'abrasion sont appliquées sur le papier par saupoudrage.

8. Procédé de fabrication d'un papier selon une des revendications 1 à 7, dans lequel le papier est imprégné de résine, et des particules résistantes à l'abrasion (1), enveloppées d'un agent adhésif au silane, sont saupoudrées sur le papier.

9. Panneau stratifié avec un papier selon une des revendications 1 à 7, **caractérisé en ce que** le papier (12) est appliqué sur un panneau de base (13), composé en particulier d'un matériau à base de bois tel que HDF ou MDF, et le côté opposé du panneau de base (12) est muni de préférence d'un papier de contre-traction (14) qui a en particulier un poids de 20 à 60 g/m².

10. Panneau stratifié selon la revendication 9, **caractérisé en ce que** le panneau stratifié comporte des éléments d'accouplement (15, 16), tels que rainure et languette, placés sur les côtés ainsi que, en particulier, d'autres éléments d'accouplement, de sorte que deux panneaux stratifiés peuvent être assemblés par complémentarité de formes aussi bien perpendiculairement à la surface du panneau que parallèlement à la surface du panneau.

11. Panneau stratifié selon une des revendications 9 ou 10, **caractérisé en ce que** le papier de contre-traction (14) est imprégné d'une résine d'urée.
